# EUROPÄISCHE PATENTSCHRIFT

(11) **EP 1 699 284 B1**
(45) Veröffentlichungstag und Bekanntmachung des Hinweises auf die Patenterteilung: **04.04.2012**
(21) Anmeldenummer: 04764553.6
(22) Anmeldetag: 27.08.2004
(51) Int. Cl.: A01F 25/18, A01F 25/14

(54) **FAHRBAHRE STOPFMASCHINE ZUR HERSTELLUNG BODENLAGERNDER SILAGE MIT EINEM FOLIENSCHLAUCH**
MOVABLE STUFFING MACHINE FOR THE PRODUCTION OF SILAGE STORED ON THE BOTTOM BY MEANS OF A TUBULAR FILM
MACHINE A BOURRER MOBILE POUR LA PRODUCTION D'UN ENSILAGE DE FOURRAGE DEPOSÉ SUR LE SOL, COMPORTANT UN TUYAU SOUPLE FORME D'UNE FEUILLE

(30) Priorität: 27.08.2003 DE 10339751
(43) Veröffentlichungstag der Anmeldung: 13.09.2006
(73) Patentinhaber: Altenbuchner, Josef, 5122 Hochburg-Ach (AT)
(72) Erfinder: Altenbuchner, Josef, 5122 Hochburg-Ach (AT)
(74) Vertreter: Bardehle, Heinz
(86) Internationale Anmeldenummer: PCT/EP2004/009579
(87) Internationale Veröffentlichungsnummer: WO 2005/020666

(56) Entgegenhaltungen:
- EP-A- 0 659 332
- EP-A- 1 210 864
- DE-A- 4 012 482
- DE-A- 4 022 043
- DE-A- 10 048 945
- DE-U- 8 806 689
- US-A- 5 974 776

## Beschreibung

Die Erfindung betrifft eine fahrbare Stopfmaschine zur Herstellung bodenlagernder Silage, zur Füllung eines Folienschlauches, gemäß der im Oberbegriff des Anspruches 1 angegebenen Art.

Es sind Stopfmaschinen bekannt, bei denen das Silagegut in einen Annahmespeicher aufgegeben wird und mit einem Förderer an eine Fülleinrichtung übergeben wird. Die Fülleinrichtung besteht aus einer Stopfwand die quer zur Längsrichtung der Stopfmaschine und zur Stopfvorrichtung angeordnet ist und an die nach oben und seitlich eine Führungswand anschließt, über die der Folienschlauch beim Füllen gleitet Die Stopfwand setzt sich nach unten und vorne mit einem Pressenmantel fort, der den unteren Teil einer Pressenwanne bildet Eine waagerecht an dem Pressenmantel ist ein im rechten Winkel zur Stopfrichtung und zur Längsrichtung der Stopfmaschine ausgerichteter Zinkenrotor, als Förderpresse, von unten nach oben rotierend gelagert, der durch die Stopfwand in den Stopfraum greift und bei dem Abstreifer nach unten gerichtet zwischen die Rotorzinken eingreifen. Vor dem Eintritt des Silagegutes in den Bereich der Förderpresse ist im Abstand dazu eine Dosiereinrichtung angebracht Oberhalb der Stopfmaschine ist eine Folienrolle im rechten Winkel zur Stopfrichtung ausgerichtet gelagert, von der eine aufgeschnittene Folie oben und beiderseits nach unten über die Führungswand geführt wird.

Nachteilig bei dieser Anordnung ist es, dass die Stopfleistung des Zinkenrotors infolge der zu geringen Ausgleichswirkung während der Beschickung und der Zufuhr zur Förder- presse ungleichmäßig ist und damit zu ungleichmäßiger Füllung und Verdichtung und einem ungleichmäßigen Abzug der Folie führt, wodurch eine mangelhafte Vergärung die Folge ist

Die gleichmäßige Zufuhr beim Auffalten der Folie ist ohne Führungsräder oder mit solchen von zu geringer Breite und Verstellbarkeit unmöglich und führt zu hohen Zugspannungen und Verziehen der Folie und damit zu deren ungenügendem Verschluss im Bodenbereich.

Eine gattungsgemäße fahrbare Stopfmaschine zur Herstellung bodenlagernder Silage zur Füllung eines Folienschlauches ist aus der DE 4012 482 A bekannt Hierbei wird das Gut von einer Fördereinrichtung in eine Formeinrichtung gepresst wird, wobei sich die Förder- und Formeinrichtung in Abhängigkeit von der Zufuhrmenge und/oder des sich gegen eine feste Rückwand und des abgelegt Gutes erzeugten Druckes in Richtung des sich aufbauenden Gutstranges fortbewegen. Die fahrbare Stopfmaschine weist dabei eine Stopfwand auf, die quer zur Längsrichtung der Stopfmaschine und zur Stopfrichtung angeordnet ist An die Stopfwand schließt sich nach oben und seitlich eine Führungswand in Stopfrichtung an. Zudem ist eine im rechten Winkel zur Längsrichtung der Stopfmaschine ausgerichtete waagerecht angeordnete, als Zinkenrotor mit wendeiförmig versetzten Förderzinken versehene, an der Stopfwand gelagerte angetriebene Verdichterschnecke vorgesehen. Dieser ist eine Beschickungseinrichtung mit einer Dosiervorrichtung vorgeordnet Zudem ist eine oberhalb gelagerte Silofolienrolle vorgeshen, von der die Silofolie über wenigstens eine Umlenkungsrolle an die Führungswand geführt wird. Der Zinkenrotor ist in einer Rotorwanne mit den Förderzinken durch eine Stopföffnung in der Stopfwand hindurchgreifend angeordnet, zwischen welche reihenweise angeordneten Förderzinken von oben Abstreifer an die Rotorwelle hineinreichen und zwischen die von unten, durch Schlitze in der Rotorwanne, Verdichtungselemente ragen,

Aufgabe der Erfindung ist es, bei einer Stopfmaschine gemäß dem Oberbegriff des Anspruches 1 die beschriebenen Nachteile zu beseitigen oder zu vermeiden und eine Stopfmaschine zu schaffen, die eine rasches zuverlässiges und völlig gleichmäßiges Stopfen mit hoher Verdichtung und geringem Auffedern auch bei schwieriger Grassilage und bei Verwendung von billiger gefalteter Silofolie zulässt, wobei eine zusammengefasste Anordnung von Stopfmaschine und Beladevorrichtung als verfahrbare Einheit, die von einem Schlepper aus antreibbar ist

Diese Aufgabe wird bei der gattungssgemäßen Stopfmaschine mit den Merkmalen des kennzeichnenden Teiles des Anspruches 1 in Verbindung mit seinen Oberbegriffsmerkmalen gelöst

Die Unteransprüche betreffen besonders vorteilhafte Ausgestaltungen der Erfindung.

Mit der Anbringung eines Zinkenrotors in einer Rotorwanne, wobei dessen Förderzinken durch eine über die Breite der Stopfwand reichenden Stopföffnung hindurchgreifen und mit dem das Fördergut so stark verdichtet, dass im Stopfraum nur eine geringe Auffederung erfolgt, wobei das verdichtete Fördergut von oben von Abstreifern aus dem Zinkenrotor hinausbefördert wird, die zwischen die reihenweise angeordneten Förderzinken an die Rotorwelle hineinreichen, während von unten durch Schlitze in der Rotorwanne Verdichtungselemente zwischen die reihenweise angebrachten Förderzinken gegen eine Zustell- kraft erzeugende Vorrichtung verschwenkbar sind, die den einstellbaren möglichst hohen Verdichtungsgrad durch Verengung des Förderspaltes zwischen den Förderzinken sorgen.

Die dadurch erreichbare hohe und gleichmäßige Verdichtung des Silagegutes ergibt einen hohen Füllungsgrad der Silofolie und eine gute Vergärung.

Eine besonders wirksame Förderung und gleichzeitige Verdichtung wird erreicht, indem die Förderzinken des Zinkenrotors in einer Mehrzahl, fünf oder sechs an einer Zinkenscheibe am Umfang eingearbeitet sind und diese auf einer Rotorwelle in Abständen voneinander befestigt sind. Dadurch dass die Zinkenscheiben von der Mitte des Zinkenrotors zum Rand hin und gegen die im Stopfraum von unten nach oben gerichtete Drehrichtung in zahlreichen Teilschritten versetzt angeordnet sind, die insgesamt eine Vierteldrehung ergeben, wird die aufgewandte Verdichtungsarbeit vergleichmäßigt und die Verdichtung richtet sich durch den Versatz auch nach außen zu.

Um eine hohe bleibende Verdichtung zu erreichen ist zwischen benachbarten Zinkenscheiben des Zinkenrotors jeweils ein Verdichtungselement angeordnet, das im Abstand hinter dem Zinkenrotor an einer parallel ausgerichteten Achse schwenkbar zwischen einer Lage in der dieses mit der Rotorwanne abschließt und einer Lage in der dieses von unten an die Rotorwelle reicht selbständig von den benachbarten gelagert ist, wodurch ein weiter Verdichtungsbereich überstrichen wird.

Um eine gleichmäßige Verdichtung zu ermöglichen ist für jedes Verdichtungselement ein Federelement, das als Federpaket aufgebaut ist an einem parallel zur Achse der Verdichtungselemente verschwenkbar gelagertem Federträger befestigt, der über einem Hebelarm mit einem hydraulischen Verstellzylinder gelenkig verbunden und über den Verdichtungsdruck steuerbar ist

Eine Vereinfachung der Anordnung wird ohne Nachteil für die Verdichtung des Silogutes durch Anwendung von Federstäben als Verdichtungselementen erreicht die in gleicher Weise wie die steifen Verdichtungselemente zwischen den Förderzinken schwach gekrümmt an die Rotorwelle herangeführt sind und frei enden und am anderen Ende an einem Tragbalken nebeneinander eingespannt sind. Der Tragbalken ist wie bei den Federelementen beschrieben, mit einem Hebelarm verbunden an dem ein hydraulischer Stellzylinder angreift, der am Maschinenrahmen abgestützt ist und mit dem das Ausschwenken und das Zustellen erfolgt. Mit dieser Anordnung erreicht man ebenfalls eine an die Futtermenge angepasste Verdichtung durch die Federkraft der Verdichtungselemente selbst, wobei der Grad der maximalen Verdichtungsmöglichkeit mit Hilfe des hydraulischen Stellzylinders einstellbar ist

Mit einer gleichmäßigen Beschickung des Zinkenrotors wird Durchsatzleistung verbessert und die Verdichtung kann gleichmäßig und hoch eingestellt werden. Dazu ist oberhalb und hinter der Rotorwanne eine Schneckenwanne angebracht, in der eine Verteilerschnecke parallel zum Zinkenrotor in unmittelbarer Nähe zu diesem, ausgerichtet und dreht zur besseren Übergabe in entgegengesetzten Drehsinn zum Zinkenrotor, von der Mitte beiderseits zum Rand hin fördernd umläuft, wobei oberhalb ein erster Schrägförderer der Beschickungseinrichtung das Silagegut abwirft.

Um einen genügenden Speicherraum zu schaffen ist der zweite Schrägförderer der Beschickungseinrichtung seitlich mit Bordwänden versehen und weist eine größere Breite als der erste Schrägförder auf. Dieser übergibt auf den ersten Schrägförderer und beide Schrägförderer sind wegen der robusten störungarmen Bauart als Kratzbodenförderer ausgebildet

Zur einstellbaren Begrenzung der Beladehöhe an Silagegut auf dem ersten Schrägförderer ist die Wand des zweiten Schrägförderers an der Übergabe auf den ersten Schrägförderer von einer Dosiervorrichtung abgeschlossen ist, die aus einem hydraulisch höhenverstellbaren und steuerbaren Steilkettenförderer besteht, wodurch die Zufuhr zu dem Zinkenrotor vergleichmäßigt und damit die Befüllung der Silofolie wird.

Vor der Dosierungsvorrichtung ist die Breite des zweiten Schrägförderers, also vor der Übergabe auf den ersten Schrägförderer für die Herstellung eines großen Speicherraumes wesentlich breiter als der Breite des ersten Schrägförderers entspricht und wird dort auf dessen Breite zusammengeführt und ist zur besseren Übergabe in den Ecken davor mit aufrechten Räumschnecken versehen.

Die Silofolie ist mit der Silofolienrolle im Bereich oberhalb des ersten Schrägförderers m rechten Winkel zur Längsrichtung der Stopfmaschine an Rollenträgern gelagert um einen genügenden Abzugsweg zu erhalten und die Silofolie wird gegen die Stopfrichtung über eine tiefer, etwa in halber Höhe der Führungswand angeordnete Umlenkrolle in Stopfrichtung nach oben, unten und wird seitlich gleichmäßig auseinandergezogen zur Führungswand geführt, damit auf alle Teile der Silofolie ein möglichst gleichmäßiger Zug einwirkt; je nach Art der verwendeten Folie ist auch die Verwendung von zwei unterschiedlichen Silofolien möglich und es werden dann zwei Silofolienrollen auf den Rollenträgern gelagert

Für die Ablage der Silofolie unterhalb der Stopfwand ist die Anbringung von beiderseits unter der Stopfwand angeordneten, verschwenkbar einstellbaren Rollenträgern mit daran jeweils paarweise gelagerten Führungsrollen vorgesehen.

Für die gleichmäßige Zufuhr der Silofolie unter die Stopfwand ist ein Antrieb jeweils beider Führungsrollen, hydraulisch oder elektrisch zur Vermeidung von Zufuhrbehinderungen vorteilhaft, wobei eine Freilaufschaltung gekoppelt an die Fahrt der Maschine eine weiter Verbesserung ergibt

Die Anbringung von Metallreifen mit Profil, besonders mit Spitzen, jeweils an beiden Führungsrollen ergibt eine wesentlich verbesserte Griffigkeit beim Vorschub, ohne dass entstehende Perforationen in dem betroffenen Bereich unter dem Silo auf dem Boden einen Nachteil brächte.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

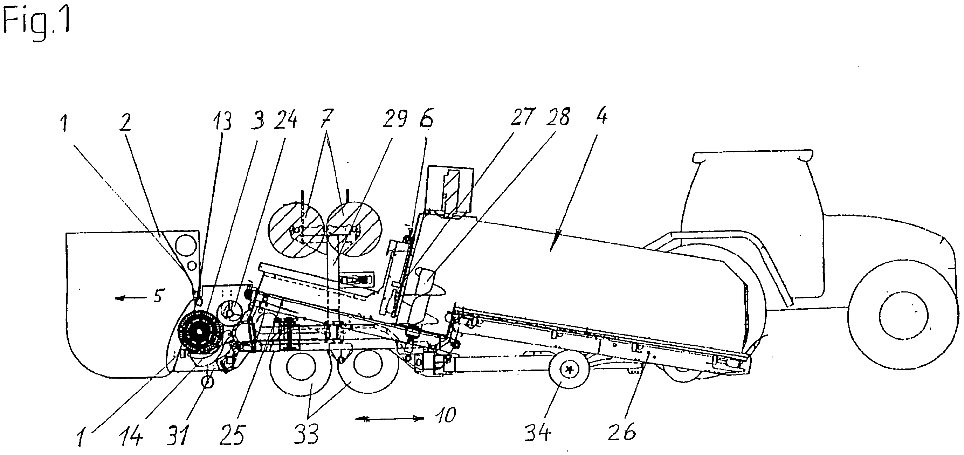

In der Beschreibung, in den Ansprüchen und in der Zeichnung werden die in der unten aufgeführten Liste der Bezugzeichen verwendeten Begriffe und zugeordneten Bezugzeichen verwendet In der Zeichnung bedeutet
- Fig. 1: einen Längsschnitt der Stopfmaschine mit einem antreibenden Schlepper, schematisch;

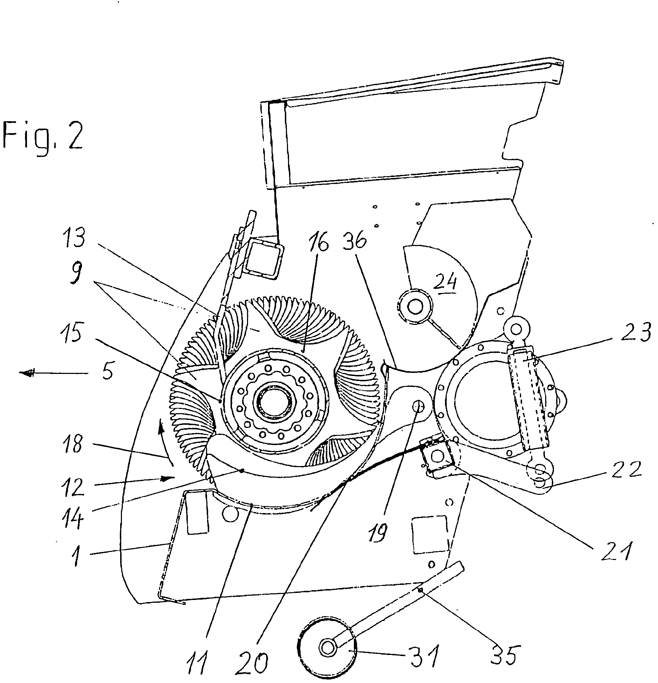

- Fig. 2: einen Ausschnitt aus dem Längsschnitt der Stopfmaschine in Fig. 1, mit der Stopfeinrichtung, schematisch;

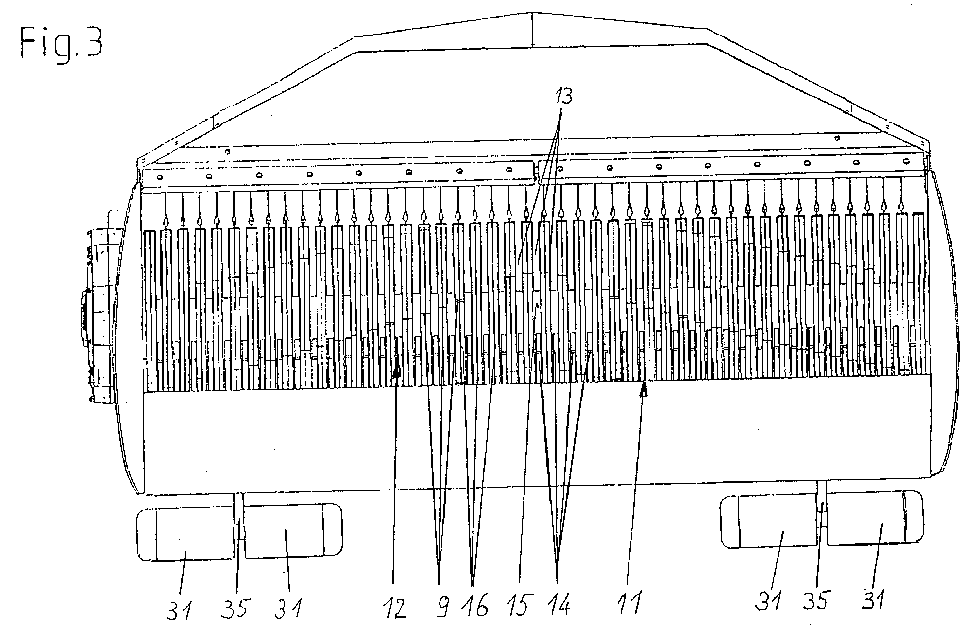

- Fig. 3: eine Frontansicht der Stopfmaschine nach Fig. 1 auf die Arbeitsseite der Stopfwand gesehen, mit dem Zinkenrotor und den Umlenkrollen für die Folie, schematisch, und
- Fig. 4: einen Ausschnitt aus dem Längsschnitt der Stopfmaschine wie in Fig. 1, mit anderen Verdichtungselementen, schematisch.

Die fahrbare Stopfmachine zur Herstellung von in Silofolie eingeschlossener bodenlagernder Silage, die im Wesentlichen aus vorzugsweise gehäckseltem Halm-und Blattgut, umfasst auf einem Maschinenrahmen 32 mit einem Fahrwerk 33 und einem Fahrwerk für einen zweiten Schrägförderer 26 einer Beschikkungsvorrichtung 4 eine quer zur Stopfrichtung 5 des Silagegutes ausgerichtete Stopfwand 1 an der ein Zinkenrotor 3 in einer Rotorwanne 11 waagerecht und im rechten Winkel zur Längsrichtung 10 der Stopfmaschine gelagert ist und mit den Förderzinken 9 durch eine Stopföffnung 12 in den Stopfraum 17 greift, eine im Gutstrom dem Zinkenrotor 3 parallel vorgelagerte Verteilerschnecke 24 und die Beschickungsvorrichtung 4 mit einem ersten Schrägförderer 25, einem auf diesen abwerfenden zweiten Schrägförderer 26 und einer zwischen diesen angeordneten Dosiervorrichtung 6.

Der Znkenrotor 3 besteht aus Zinkenscheiben 16, in die jeweils sechs Förderzinken 9 gleichmäßig verteilt eingearbeitet sind und die etwa um ihre Dicke auf Abstand an der Rotorwelle 15 befestigt sind, wobei diese mit den Förderzinken 9 von der Mitte des Zinkenrotors 3 aus bis an den Rand schrittweise gegen. die, im Stopfraum 17 von unten nach oben gerichtete Drehrichtung 18 versetzt sind, insgesamt um eine Vierteldrehung.

Durch die Rotorwanne 11 reichen Verdichtungselemente 14 zwischen die Förderzinken 9 und die Zinkenscheiben 16 und sind zwischen einer ausgeschwenkten Lage, in der sie mit der Rotorwanne 11 abschließen und einer eingeschwenkten Lage in der sie bis an die Rotorwelle 15 reichen, an einer hinter dem Zinkenrotor 3 angeordneten Achse 19 unabhängig voneinander schwenkbar gelagert Jedes Verdichtungselement 14 wird von einem Federelement 20, das als Federpaket mit mehreren Federn steigender Länge ausgebildet ist, gegen die Rotorwelle 15 gepresst gehalten, womit der Druck auf das vom Zinkenrotor 3 geförderte Silagegut ausgeübt wird.

Die Federelemente 20 sind an einem parallel zur Achse 18 unterhalb von dieser verschwenkbar gelagerten Federträger 21 befestigt

Der Federträger 21 ist mit einem Hebelarm 22 versehen, an den ein hydraulischer Verstellzylinder 23 angreift, der am Maschinenrahmen 32 abgestützt ist und über den die Presskraft für das Silagegut einstellbar ist

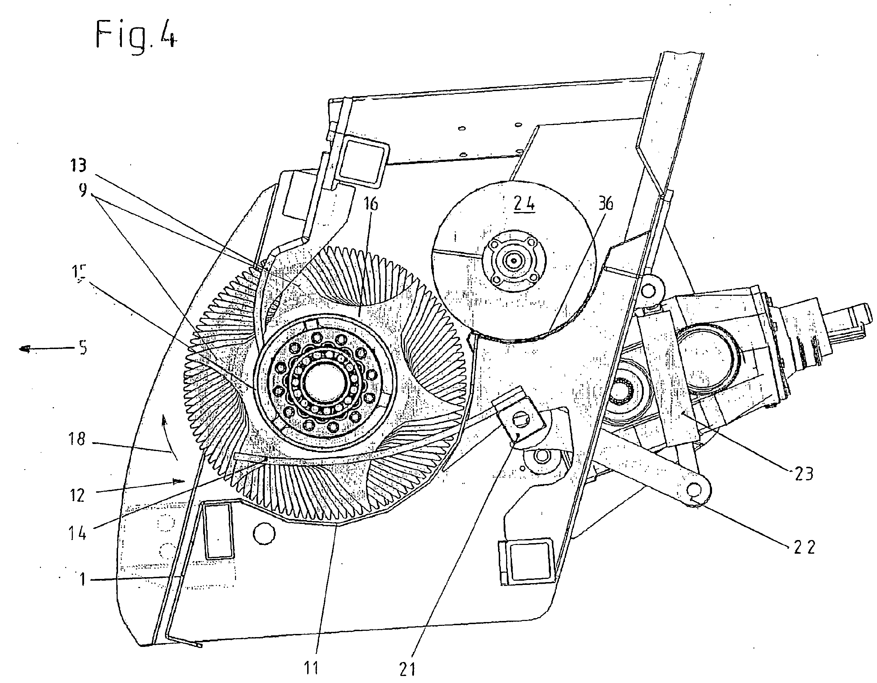

In Fig. 4 sind bei sonst gleicher Konstruktion von Hebelarm und hydraulischem Verstellzylinder an Stelle der Federträger 21 als Federstäbe ausgebildete Verdichtungselemente 14 an dem Tragbalken befestigt und zugestellt bis in die Nähe an die Rotortrommel herangeführt

Von oben reichen auf der Seite der Stopfwand 1 an einem Träger befestigte Abstreifer 13 zwischen die Förderzinken 9 bis an die Rotorwelle 15 herab.

Unmittelbar hinter dem Zinkenrotor 3 ist in einer höher angebrachten Verlängerung der Rotorwanne 11 eine Schneckenwanne 36 angebracht, in der die Verteilerschnecke 24 nach unten in den Zinkenrotor 3 fördernd umläuft, oberhalb von der der erste Schrägförderer 25 das Silagegut abgibt

Der erste Schrägförderer 25 wird von einem zweiten Schrägförderer 26 der Beschickungsvorrichtung 4 beschickt, der zur Vergrößerung des Speichervolumens eine wesentlich größere Breite aufweist und vom Aufgabebereich her mit abklappbaren Bordwänden ebenfalls zur Erhöhung des Speichervolumens versehen ist

Die Bordwände schließen mit einer Wand gegen den ersten Schrägförderer 25 ab, in der ein aufrecht angeordneter Steilkettenförderer 27 eingesetzt ist, der in Führungen mit einem Hydraulikzylinder, insbesondere gesteuert, im Abstand zum ersten Schrägförderer 25 zur Einstellung der Beladehöhe verstellbar eingerichtet ist

Die beiden Schrägförderer 25,26 und der Steilkettenförderer 27 sind als Kratzbodenkettenförderer aufgebaut

Die Silofolie ist zusammengefaltet zu einer Silofolienrolle 7 auf einem Rollenträger 29 des Maschinenrahmens 32 der Stopfmaschine im rechten Winkel zur Längsrichtung 10 oberhalb des ersten Schrägförderers 25 gelagert oder bei Verwendung von ein Kombination von zwei Silofolien sind zwei Silofolien- rollen dort gelagert

Die Silofolie wird über eine tiefer, etwa in der Höhe der Mitte der Stopfwand 1, und weiter von dieser weg angeordnete Umlenkungsrolle geführt deren Lager in Längsrichtung der Stopfmaschine hydraulisch verstellbar sind und mit der die Silofolie gleichmäßig oben seitlich und unten zu der Stopfwand 1 und über eine Führungswand 2 geleitet, die die Stopfwand 1 in Stopfrichtung 5 oben und seitlich bis an deren Unterkante reichend umgibt, die gerade und im Wesentlichen parallel zum Boden verläuft.

Die unter der Unterkante der Stopfwand 1 hindurchgezogene Silagefolie wird mit oder ohne Spalt zwischen deren Teilen auf dem Boden abgelegt und vom Silagegut auf diesem dichtend angepresst gehalten.

Zur Vergleichmäßigung des Anziehens der Silofolie sind im unteren Bereich der Stopfwand 1 Folienrollenträger 35 verstellbar angebracht, an denen jeweils paarweise Führungsrollen 31 für die nach unten laufende Silofolie gelagert sind.

### Bezugszeichenliste

- 2: Führungswand der Stopfmaschine
- 3: Zinkenrotor
- 4: Beschickungseinrichtung
- 5: Stopfrichtung der Stopfmaschine
- 6: Dosiervorrichtung der Beschickungseinrichtung 4
- 7: Silofolienrolle
- 9: Förderzinken des Zinkenrotors 3
- 10: Längsrichtung der Stopfmaschine
- 11: Rotorwanne des Zinkenrotors 3
- 12: Stopföffnung in der Stopfwand 1
- 13: Abstreifer der Förderzinken 9
- 14: Verdichtungselement des Zinkenrotors 3
- 15: Rotorwelle des Zinkenrotors 3
- 16: Zinkenscheibe der Förderzinken 9
- 17: Stopfraum
- 18: Drehrichtung des Zinkenrotors 3
- 19: Achse der Verdichtungselemente 14 des Zinkenrotors 3
- 20: Federelement für die Verdichtungselemente 14
- 21: Federträger für die Federelemente 20
- 22: Hebelarm des Federträgers 21
- 23: hydraulischer Verstellzylinder des Federträgers 21
- 24: Verteilerschnecke
- 25: erster Schrägförderer der Beschickungseinrichtung 4
- 26: zweiter Schrägförderer der Beschickungseinrichtung 4
- 27: Steilkettenförderer der Dosiervorrichtung 6
- 28: Räumschnecke der Beschickungsvorrichtung 4
- 29: Rollenträger der Silofolienrolle 7
- 31: Führungsrolle für die Silofolie
- 32: Maschinenrahmen der Stopfmaschine
- 33: Fahrwerk des Maschinenrahmens 32
- 34: Fahrwerk des zweiten Schrägförderers 26 der Beschickungsvorrichtung 4
- 35: Rollenträger der Führungsrollen 31
- 36: Schneckenwanne der Verteilerschnecke 24

## Patentansprüche

1. Fahrbare Stopfmaschine zur Herstellung bodenlagernder Silage zur Füllung eines Folienschlauches, mit einer Stopfwand (1), die quer zur Längsrichtung (10) der Stopfmaschine und zur Stopfrichtung (5) angeordnet ist und an die nach oben und seitlich eine Führungswand (2) in Stopfrichtung (5) anschließt, mit einer im rechten Winkel zur Längsrichtung (10) der Stopfmaschine ausgerichteten waagerecht angeordneten, als Zinkenrotor (3) mit wendelförmig versetzten Förderzinken (9) versehenen, an der Stopfwand (1) gelagerten angetriebenen Verdichterschnecke ausgebildet ist und der eine Beschickungseinrichtung (4) mit einer Dosiervonichtung (6) vorgeordnet ist und mit einer oberhalb gelagerten Silofolienrolle (7), von der die Silofolie über wenigstens eine Umlenkungsrolle an die Führungswand (2) geführt wird, wobei der Zinkenrotor (3) in einer Rotorwanne (11) mit den Förderzinken (9) durch eine Stopföffnung (12) in der Stopfwand (1) hindurchgreifend angeordnet ist, zwischen welche reihenweise angeordneten Förderzinken (9) von oben Abstreifer (13) an die Rotorwelle (15) hineinreichen und zwischen die von unten, durch Schlitze in der Rotorwanne (11), Verdichtungselemente (14) ragen, **dadurch gekennzeichnet, dass** die Verdichtungselemente (14) gegen eine Zustellkraft erzeugende Vorrichtung verschwenkbar sind und mit denen die Förderzinken (9) des Zinkenrotors (3), in einer Mehrzahl von fünf oder sechs am Umfang einer Zinkenscheibe (16) eingearbeitet, zusammenarbeiten, die ihrerseits auf der Rotorwelle (15) in Abständen voneinander befestigt sind und von der Mitte des Zinkenrotors (3) zum Rand hin, gegen die im Stopfraum von unten nach oben gerichtete Drehrichtung (18), in Teilschritten versetzt angeordnet sind und oberhalb und hinter der Rotorwanne (11) eine Schneckenwanne (36) anschließt, in der eine Verteilerschnecke (24) parallel zum Zinkenrotor (3) ausgerichtet, im gleichen Drehsinn von der Mitte aus beiderseits zum Rand hin fördernd, in unmittelbarer Nähe des Zinkenrotors (3) umläuft, oberhalb von der ein erster Schrägförderer (25) der Beschickungseinrichtung (4) das Silagegut abwirft, das ein zweiter Schrägförderer (26) der Beschickungseinrichtung (4), mit seitlichen Bordwänden (27) und einer größeren Breite, zur Bildung eines Speicherraumes versehen, auf den ersten Schrägförderer (25) übergibt und an der Übergabe auf den ersten Schrägförderer (25) von einer Dosiervorrichtung (6) abgeschlossen ist, die aus einem, insbesondere hydraulisch, höhenverstellbaren und steuerbaren Steilkettenförderer (27) zur Begrenzung der Beladehöhe des ersten Schrägförderers (25) besteht.

2. Fahrbare Stopfmaschine nach dem vorhergehenden Anspruch, **dadurch gekennzeichnet, dass** die Zinkenscheiben (16) mit den am Umfang eingearbeiteten Förderzinken (9) auf der Rotorwelle (15) von der Mitte des Zinkenrotors (3) zum. Rand hin gegen die im Stopfräum (17) von unten nach oben gerichtete Drehrichtung (18) in Teilschritten versetzt angeordnet sind, die insgesamt eine Vierteldrehung ergeben.

3. Fahrbare Stopfmaschine nach Anspruch 1 oder 2, **dadurch gekennzeichnet, dass** das jeweils zwischen den Zinkenscheiben (15) des Zinkenrotors (3) angeordnete Verdichtungselement (14) im Abstand hinter dem Zinkenrotor (3) an einer parallel ausgerichteten Achse (19) schwenkbar, zwischen einer Lage in der dieses mit der Rotorwanne (11) abschließt und einer Lage in der dieses von unten an die Rotorwelle (15) reicht, selbständig gelagert ist.

4. Fahrbare Stopfmaschine nach einem der Ansprüche 1 bis 3, **dadurch gekennzeichnet, dass** für jedes Verdichtungselement (14) ein Federelement (20), vorzugsweise als Federpaket aufgebaut, an einem parallel zur Achse (19) der Verdichtungselemente (14) verschwenkbar gelagertem Federträger (21) befestigt ist, der über einem Hebelarm (22) mit einem hydraulischen Verstellzylinder (23) oder dgl. gelenkig verbunden ist

5. Fahrbare Stopfmaschine nach einem der Ansprüche 1 bis 3, **dadurch gekennzeichnet, dass** die Wand des zweiten Schrägförderers (26) vor der Übergabe auf Breite des ersten Schrägförderers (25) zusammengeführt und mit aufrechten Räumschnecken (28) versehen ist

6. Fahrbare Stopfmaschine nach einem der Ansprüche 1 bis 3, **dadurch gekennzeichnet, dass** die Verdichtungselemente (14), die zwischen die reihenweise angebrachten Förderzinken (9) des Zinkenrotors (3) eingreifen, als Federstäbe ausgebildet sind, die an einem Tragbalken eingespannt sind, der über einen Hebelarm (22) mit einem hydraulischen Stellzylinder (23) gelenkig verbunden ist.

## Claims

1. Wheeled stuffing machine for the production of floor supported silage for filling of a foil tube, with a stuffing wall (1), which is disposed perpendicular to the longitudinal direction (10) of the stuffing machine and to the stuffing direction (5), and to which a guide wall (2) in stuffing direction (5) connects to the stuffing wall (1) in upward direction and sideways, having a driven compacting worm which is disposed at the stuffing wall (1) at a right angle relative to the longitudinal direction (10) of the stuffing machine, is furnished as a pronged rotor (3) with helically staggered transport prongs (9) and to which a feeding device (4) with the metering device (6) is predisposed and having an above disposed and supported silage foil roller (7) from which the silage foil (30) is led over at least a deflection roller (8) to the guide wall (2), wherein the pronged rotor (3) is disposed in a rotor trough (11) with the transport prongs (9) and gripping through a stuffing opening (12) in the stuffing wall (1), through which cleaner strippers (13) disposed between the row wise disposed transport prongs (9) reach from above to the rotor shaft (15) and between which compacting elements (14) protrude from below through slots in the rotor trough (11), **characterized in that** the compacting elements (14) are pivotable against a device generating a force for closing and with which the transport prongs (9) of the pronged rotor (3) furnished in a plurality, in particular five or six at a circumference of a pronged disk (16) cooperate which are themselves are attached on the rotor shaft (15) at distances from each other and are disposed staggered in partial steps from the middle of the pronged rotor (3) to the edge against the rotation direction (18) directed from below toward the top, and that the worm trough (36) joins above and behind the rotor trough (11), in which a distributing worm (24) is aligned parallel to the pronged rotor (3) and circulates in immediate neighborhood to the pronged rotor (3) and transporting in a sense of rotation in the distributing worm (24) from the middle on both sides towards the edge wherein a first slope conveyor (25) of the feeding device (4) throws off the silage material from above of the distributing worm (24), and that a second slope conveyor (26) of the feeding device (4) is furnished on the side with board walls (27) and with a larger width for forming of a storage chamber, transfers to the first slope conveyor (25) and is terminated by a metering device (6) at the transition point onto the first slope conveyor (25), which comprises a, in particular hydraulically height level adjustable and controllable vertical chain conveyor (27) for limiting the loading height of the first slope conveyor (25).

2. Wheeled stuffing machine according to the previous claim, **characterized in that** the pronged disks (16) are disposed staggered in partial steps from the middle of the pronged rotor (3) to the edge against the rotation direction (18) directed from below to the top, with the transport prongs (9) inserted at the circumference on the rotor shaft (15), where the partial steps result in a total of one quarter rotation.

3. Wheeled stuffing machine according to claim 1 or 2, **characterized in that** the compression element (14) each arranged in between the pronged disks (16) of the pronged rotor (3) is svivably supported at a distance behind the pronged rotor (3) on a shaft (19) arranged in parallel between a position in which it terminates with the rotor shaft and a position in which it reaches to the rotor shaft (15) from below.

4. Wheeled stuffing machine according to one of the claims 1 through 3, **characterized in that** a spring element (20), preferably built up as a spring packet, is attached at a spring support (21) pivotably supported parallel to the axis (19) of the compacting elements (14) for each compacting element (14), wherein the spring support (21) is hingedly connected with a hydraulic adjustment cylinder (23) or the like through a lever arm (22).

5. Wheeled stuffing machine according to one of the claims 1 through 3, **characterized in that** the wall of the second slope conveyor (26) is led together to the width of the first slope conveyor (25) prior to the transfer and is furnished with vertically disposed removing worms (28).

6. Wheeled stuffing machine according to one of the claims 1 through 3, **characterized in that** the compacting elements (14), which engage between the row wise installed transport prongs (9) of the pronged rotor (3), are formed as spring bars, which are tensioned at a support beam (37) which is hingedly connected to a hydraulic adjustment cylinder (23) through the lever arm (22).

## Revendications

1. Machine à bourrer mobile pour la production d'un ensilage de fourrage déposé sur le sol, pour le remplissage d'un tuyau souple formé d'une feuille, comprenant une paroi de bourrage (1), disposée transversalement par rapport à la direction longitudinale (10) de la machine à bourrer et à la direction de bourrage (5), et à laquelle est raccordée, vers le haut et latéralement, une paroi de guidage (2) en direction du bourrage (5) avec une vis sans fin motrice de compactage, disposée horizontalement et orientée perpendiculairement à la direction longitudinale (10) de la machine à bourrer, montée sur la paroi de bourrage (1), et munie, en tant que rotor à dents (3), de dents transporteuses (9) décalées hélicoïdales, et devant laquelle est disposé un dispositif de charge (4) comportant un dispositif de dosage (6) ; et un rouleau (7) de feuille à silo, monté au-dessus, à partir duquel la feuille à silo est guidée, via au moins un galet de renvoi, sur la paroi de guidage (2), sachant que le rotor à dents (3) est monté dans une cuve de rotor (11), les dents de transport (9) s'engageant à travers une ouverture de bourrage (12) ménagée dans la paroi de bourrage (1), entre les dents de transport (9) montées en série, des racleurs (13) s'étendent, à partir du haut, sur l'arbre du rotor (15), et à partir du bas, des éléments de compression (14) s'engagent à travers des fentes ménagées dans la cuve (11) du rotor, **caractérisée en ce que** les éléments de compression (14) peuvent être basculés contre un dispositif produisant une force de réglage et avec lesquels les dents de transport (9) du rotor à dents (3) insérées dans une quantité de cinq ou six sur la circonférence d'un disque à dents (16) sont accouplées, qui à leur tour sont fixées sur l'arbre de rotor (15) espacées les unes des autres et à partir du centre du rotor à dents (3) vers le bord, contre le sens de rotation (18) allant du bas vers le haut dans l'espace de bourrage décalées en pas partiels et au dessus et derrière la cuve de rotor (11) raccorde un auget de vis sans fin (24) dans lequel une vis de distribution (24) est dirigée parallèlement au rotor à dents (3), circule dans le même sens de rotation transportant à partir du centre des deux côtés vers le bord, à proximité du rotor à dents (3), au dessus de laquelle un premier transporteur incliné (25) du dispositif de charge (4) éjecte la marchandise d'ensilage, qu'un deuxième transporteur incliné (26) du dispositif de charge (4) muni de parois de bord latérales (27) et d'une plus grande largeur pour la formation d'un espace de retenue, délivre sur le premier transporteur incliné (25) et sur la remise sur le premier transporteur incliné (25) est verrouillé par un dispositif de dosage (6), qui est constitué d'un transporteur à chaîne incliné (27) notamment hydraulique, réglable en hauteur et réglable pour la limitation de la hauteur de chargement du premier transporteur incliné (25).

2. Machine à bourrer mobile selon la revendication précédente **caractérisée en ce que** les disques à dents (16) avec les dents de transport (9) insérées sur la circonférence sont placés en décalé en pas partiels sur l'arbre de rotor (15) à partir du milieu du rotor à dents (3) vers le bord contre le sens de rotation allant du bas vers le haut dans l'espace de bourrage (17), qui engendre un quart de tour au total.

3. Machine à bourrer mobile selon revendication 1 ou 2, **caractérisée en ce que** l'élément de compression (14) placé respectivement entre les disques à dents (15) du rotor à dents (3) est logé de manière autonome à distance derrière le rotor à dents (3) pouvant être basculé sur un axe (19) orienté parallèlement, entre une position dans laquelle celui-ci verrouille avec la cuve de rotor (11) et une position dans laquelle celui-ci atteint l'arbre de rotor (15) par le bas.

4. Machine à bourrer mobile selon l'une des revendications 1 à 3, **caractérisée en ce que** pour chaque élément de compression (14), un ressort (20) de préférence monté en tant que bloc-ressort, est fixé sur un support de ressort (21) parallèlement à l'axe (19) des éléments de compression logé en position basculable, qui est relié de manière articulée par un bras de levier (22) avec un cylindre hydraulique réglable (23) ou autre.

5. Machine à bourrer mobile selon l'une des revendications 1 à 3, **caractérisée en ce que** la paroi du deuxième transporteur incliné (26) avant la remise est réunie sur la largeur du premier transporteur incliné (25) et est munie de vis de nettoyage (28) droites.

6. Machine à bourrer mobile selon l'une des revendications 1 à 3, **caractérisée en ce que** les éléments de compression (14) qui s'engagent entre les dents de transport (9) du rotor à dents (3) placées en série, sont formés en tant que barres pour ressort qui sont fixées sur une poutre qui est reliée de manière articulée par un bras de levier (22) avec un cylindre hydraulique réglable (23).
